# EUROPÄISCHE PATENTSCHRIFT

(11) **EP 1 708 062 B1**
(45) Veröffentlichungstag und Bekanntmachung des Hinweises auf die Patenterteilung: **19.11.2008**
(21) Anmeldenummer: 06005563.9
(22) Anmeldetag: 17.03.2006
(51) Int. Cl.: G05B 19/418, G06F 17/30, G06F 17/50

(54) **Vorrichtung und Verfahren zur Verwaltung von Daten, die einem komplexen Gegenstand zugeordnet sind**
Device and method for administration of data which are assigned to a complex object
Dispositif et procédé destinés à la gestion de données attribuées à un objet complexe

(30) Priorität: 21.03.2005 DE 102005012970
(43) Veröffentlichungstag der Anmeldung: 04.10.2006
(73) Patentinhaber: Sitech Sitztechnik GmbH, 38442 Wolfsburg (DE)
(72) Erfinder: Schwarz, Steffen, 38106 Braunschweig (DE)
(74) Vertreter: Reitstötter - Kinzebach

(56) Entgegenhaltungen:
- EP-A- 0 304 866
- EP-A- 1 507 223
- WO-A-02/46980
- DE-A1- 10 129 654

## Beschreibung

Die vorliegende Erfindung betrifft eine Vorrichtung zur Verwaltung von Daten, die einem aus einer Vielzahl von Einzelteilen zusammengesetzten komplexen Gegenstand zugeordnet sind, bei einer Veränderung des komplexen Gegenstandes. Bei dieser Veränderung durchläuft zumindest ein Teil der Einzelteile eine Reihe von Bauständen.

Ein komplexer Gegenstand, wie beispielsweise ein Kraftfahrzeug, setzt sich aus mehreren tausend Einzelteilen zusammen. Für jedes Einzelteil gibt es etliche Varianten, so dass die Zahl der Teilekombinationen, aus denen sich das Kraftfahrzeug zusammensetzen kann, sehr groß ist. Die Einzelteile, aus denen sich das Kraftfahrzeug zusammensetzt, werden in einer Stückliste erfasst. In der Stückliste sind dabei für jedes Einzelteil eine Vielzahl von relevanten Daten gespeichert.

Bei der Weiterentwicklung des Kraftfahrzeugs bzw. eines Teils des Kraftfahrzeugs, wie beispielsweise eines Zusammenbaus aus mehreren Einzelteilen, werden einige Einzelteile verändert. Üblicherweise durchläuft jedes Einzelteil eine Reihe von Bauständen, bis es den Endzustand in dem weiterentwickelten Kraftfahrzeug erreicht. Während der Entwicklungsphase ergibt sich hierbei das Problem, dass nicht jeder Baustand eines weiterentwickelten Einzelteils mit den bisherigen Einzelteilen oder bestimmten Bauständen anderer weiterentwickelter Einzelteile zusammenpasst. Soll beispielsweise während der Entwicklungsphase ein Prototyp eines Zusammenbaus aufgebaut werden, ergibt sich das Problem, dass man nicht weiß, ob die aktuellen Baustände der jeweiligen Einzelteile des Zusammenbaus überhaupt zusammenpassen. Falls die aktuellen Baustände nicht zusammenpassen, weiß man außerdem nicht, welche Baustände welcher Einzelteile zusammenpassen.

Aus der DE 101 29 654 ist ein Verfahren zum Ermitteln von Auswirkungen von Konstruktionsänderungen bekannt. Das Verfahren wird insbesondere bei der Toleranzplanung eingesetzt. Durch das Verfahren können Unverträglichkeiten bei Toleranzänderungen oder spätere Änderungskonstruktionen minimiert werden. Die vorstehend genannten Probleme bei der Weiterentwicklung von komplexen Gegenständen oder Zusammenbauten können jedoch nicht gelöst werden.

Aus der EP 1 507 223 A1 ist ein Produktkonfigurationssystem bekannt, welches eine hierarchische Knotenstruktur beinhaltet, welche Varianten des zu konfigurierenden Produkts darstellen. Den Varianten sind Auswahlzustände zugeordnet, aus denen sich ergibt, ob die Varianten einem konfigurierbaren Produkt entsprechen. Das System umfasst eine Beziehungsdatenbank mit Beziehungsinformationen, welche körperliche und/oder funktionale Beziehungen unter den Varianten betreffen. Mittels dieses Produktkonfigurationssystems kann bestimmt werden, ob ein neues Teil eines komplexen Gegenstands ein altes Teil ersetzen kann.

In der EP 0 304 866 A2 wird ein System beschrieben, mit dem die Kompatibilität zwischen einer Vielzahl von Geräten sichergestellt werden kann. Schließlich ist aus der WO 02/46980 A2 ein Verfahren zum Konfigurieren eines Produktes bekannt, welches eine Anzahl von Komponenten aufweist.

Es ist die Aufgabe der vorliegenden Erfindung, eine Vorrichtung und ein Verfahren der eingangs genannten Art bereitzustellen, welche die Verwaltung der bei der Weiterentwicklung eines komplexen Gegenstandes und bei der Prototypenerstellung eines solchen Gegenstandes anfallenden Daten so verbessert, dass der Aufwand bei der Kombination der Einzelteile für bestimme Baustände zu dem komplexen Gegenstand verringert wird.

Diese Aufgabe wird durch eine Vorrichtung mit den Merkmalen des Anspruchs 1 und ein Verfahren mit den Merkmalen des Anspruchs 11 gelöst. Vorteilhafte Aus- und Weiterbildungen ergeben sich aus den Unteransprüchen.

Die erfindungsgemäße Vorrichtung umfasst eine Datenbank, in der die gegenseitigen Abhängigkeiten der Einzelteile für jeden Baustand anhand von Abhängigkeitsdaten erfasst sind. Während der Weiterentwicklung eines Einzelteils ist somit für jeden Baustand die Abhängigkeit zu jedem Baustand der anderen Einzelteile erfasst. Auf diese Weise lassen sich sehr einfach die aktuellen Baustände der Einzelteile in ihren Abhängigkeiten zueinander vergleichen. Ein manueller Abgleich von verschiedenen unabhängig voneinander geführten Stücklisten ist nicht erforderlich. Die erfindungsgemäße Vorrichtung lässt sich daher besonders vorteilhaft bei der Entwicklungsdokumentation des komplexen Gegenstandes und bei der Prototypenerstellung einsetzen.

Bei der erfindungsgemäßen Vorrichtung enthalten die Abhängigkeitsdaten Informationen darüber, ob bei dem zusammengebauten komplexen Gegenstand ein Einzelteil im Umfeld eines anderen Einzelteils angeordnet ist, so dass die Veränderung des einen Einzelteils Auswirkungen auf das andere Einzelteil im Umfeld des einen Einzelteils hat. Wird nur ein Teil des komplexen Gegenstands, beispielsweise ein Zusammenbau, betrachtet, ist es vielfach wichtig zu wissen, wie das Umfeld des Zusammenbaus gestaltet ist, um festzustellen wie sich Änderungen der Einzelteile des Zusammenbaus auf die Einzelteile im Umfeld des Zusammenbaus auswirken bzw. mit diesen vertragen.

Gemäß einer bevorzugten Weiterbildung der erfindungsgemäßen Vorrichtung enthalten die Abhängigkeitsdaten Information darüber, ob bei dem zusammengebauten komplexen Gegenstand ein Einzelteil an einem anderen Einzelteil befestigt ist. Die Befestigung zweier Bauteile aneinander stellt eine direkte Abhängigkeit dieser Einzelteile dar. Bei einer Änderung der Geometrie eines Einzelteils muss sich vielfach auch die Geometrie des anderen Einzelteils ändern. Ferner kann eine Änderung des Materials eines Einzelteils je nach Befestigungsart Auswirkungen auf das Material des anderen Einzelteils haben.

Gemäß einer weiteren bevorzugten Ausbildung der erfindungsgemäßen Vorrichtung enthalten die Abhängigkeitsdaten Information darüber, ob bei dem zusammengebauten komplexen Gegenstand ein Einzelteil eine gemeinsame Anlagefläche mit einem anderen Einzelteil besitzt. Diese Art der Abhängigkeit zweier Einzelteile ist insbesondere bei Änderungen der Geometrie eines Einzelteils im Bereich der Anlagefläche zu dem anderen Einzelteil wichtig.

Vorzugsweise sind diese Informationen in den Abhängigkeitsdaten für jeden Baustand des einen Einzelteils und für jeden Baustand des anderen Einzelteils erfasst.

Gemäß einer bevorzugten Weiterbildung der erfindungsgemäßen Vorrichtung ist in der Datenbank für jeden Baustand eines Einzelteils erfasst, ob er mit einem Baustand eines anderen Einzelteils kombinierbar ist, falls zwischen den beiden Bauteilen eine Abhängigkeit besteht. Auf diese Weise lässt sich bei der Weiterentwicklung des komplexen Gegenstandes sehr einfach auswerten, welche Baustände der Einzelteile jeweils zueinander passen, um beispielsweise einen Prototypen aufzubauen.

Die erfindungsgemäße Vorrichtung weist vorzugsweise eine mit der Datenbank verbundene Recheneinheit sowie eine Ausgabeeinheit auf. Mit der Recheneinheit kann berechnet werden, aus welchen Bauständen der Einzelteile der komplexe Gegenstand zusammengebaut werden kann. Beispielsweise kann mit der Recheneinheit für einen Baustand eines Einzelteils berechnet werden, aus welchen Bauständen der restlichen Einzelteile des komplexen Gegenstands dieser zusammengebaut werden kann.

Bevorzugt sind in der Datenbank die aufeinander folgenden Baustände eines Einzelteils erfasst. Ferner können die aufeinander folgenden Baustände des komplexen Gegenstands erfasst sein. Diese Option erleichtert es, die verschiedenen Stufen der Weiterentwicklung sowohl der Einzelteile als auch des komplexen Gegenstands zu verfolgen.

Bei dem erfindungsgemäßen Verfahren werden die gegenseitigen Abhängigkeiten der Einzelteile für jeden Baustand anhand von Abhängigkeitsdaten in einer Datenbank erfasst . Die Erfassung dieser Daten erleichtert eine nachfolgende Auswertung während der Weiterentwicklung des komplexen Gegenstandes. Die in der Datenbank erfassten Abhängigkeitsdaten enthalten die vorstehend genannten Informationen zur Befestigung der Einzelteile, zu gemeinsamen Anlageflächen und zum Umfeld der Einzelteile für jeden Baustand der jeweiligen Einzelteile.

Die Erfindung wird nun anhand eines Ausführungsbeispiels mit Bezug zu den Zeichnungen erläutert.

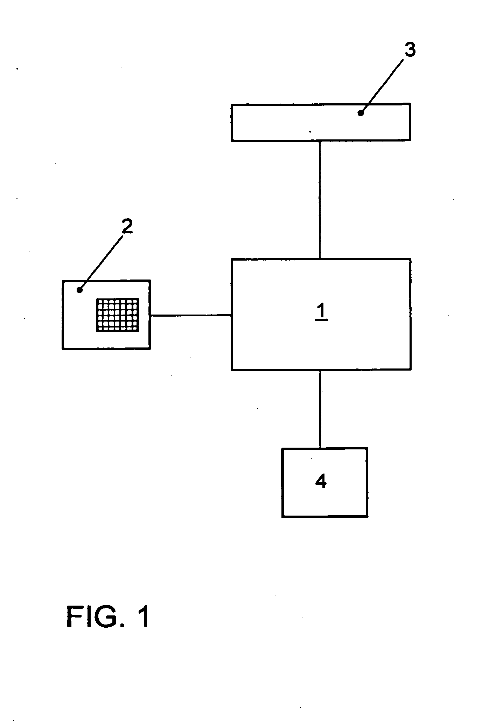

Fig. 1 zeigt schematisch ein Ausführungsbeispiel der erfindungsgemäßen Vorrichtung und
Fig. 2 zeigt die in der Datenbank gespeicherte Beziehungsmatrix mit den Abhängigkeitsdaten.

Die erfindungsgemäße Vorrichtung und das erfindungsgemäße Verfahren dienen der Verwaltung von Daten bei einer Veränderung eines komplexen Gegenstandes. Der komplexe Gegenstand setzt sich aus einer Vielzahl von Einzelteilen zusammen. Ist der komplexe Gegenstand ein Kraftfahrzeug, sind die Einzelteile alle Teile, aus denen sich das Kraftfahrzeug zusammensetzt. Für diese Einzelteile gibt es üblicherweise eine sog. Stückliste, in welcher für jedes Einzelteil Daten, wie die Teilenummer, Gewicht, Material, Lieferant, erfasst sind. Mehrere Einzelteile können zu einem Zusammenbau gruppiert werden. Ein solcher Zusammenbau ist beispielsweise der Fahrzeugsitz. Auch er stellt einen komplexen Gegenstand dar.

Das im Folgenden beschriebene Ausführungsbeispiel betrifft die Verwaltung von Daten, welche bei der Weiterentwicklung eines Kraftfahrzeugs anfallen. Beispielsweise wird der Kraftfahrzeugsitz weiterentwickelt. Dieser Sitz setzt sich aus einer Vielzahl von Einzelteilen, für die es jeweils mehrere Varianten geben kann, zusammen. Der Sitz soll in das Kraftfahrzeug eingebaut werden, so dass es Kraftfahrzeugteile im Umfeld des Sitzes gibt, die möglicherweise bei Änderungen von Einzelteilen des Sitzes zu berücksichtigen sind. Die im Folgenden beschriebene Vorrichtung sowie das Verfahren bieten eine Dokumentation der Entwicklungs- bzw. Baustände der Einzelteile und der zugehörigen Zusammenbauten. Der manuelle Dokumentationsaufwand wird durch die Vorrichtung bzw. das Verfahren erheblich verringert, insbesondere bei häufigen und kurzfristigen Änderungen von Einzelteilen und bei komplexen Zusammenbauten.

Die Vorrichtung umfasst eine Eingabeeinheit 3, über welche Daten manuell eingegeben werden können. Die Eingabeeinheit 3 kann außerdem oder alternativ eine Schnittstelle für die elektronische Datenübertragung von anderen Einrichtungen besitzen.

Die Eingabeeinheit 3 ist mit einer Recheneinheit 1 verbunden, die auf einen Speicher 2 zugreift. Der Speicher 2 enthält eine Stückliste der Einzelteile des komplexen Gegenstands sowie eine Beziehungsmatrix mit Abhängigkeitsdaten der Einzelteile für jeden Baustand bzw. Entwicklungsstand. Mittels der Recheneinheit 1 und der Eingabeeinheit 3 können die in dem Speicher 2 gespeicherten Daten verändert werden.

Mit der Recheneinheit können außerdem Auswertungen vorgenommen werden, welche über die Ausgabeeinheit 4 ausgegeben werden können. Die Ausgabeeinheit 4 kann beispielsweise ein Bildschirm sein oder eine Schnittstelle zu anderen Einrichtungen, an welche die Ausgabedaten elektronisch übertragen werden sollen.

Im Folgenden soll der Fall betrachtet werden, dass ein Zusammenbau, wie z. B. ein Fahrzeugsitz, weiterentwickelt wird.

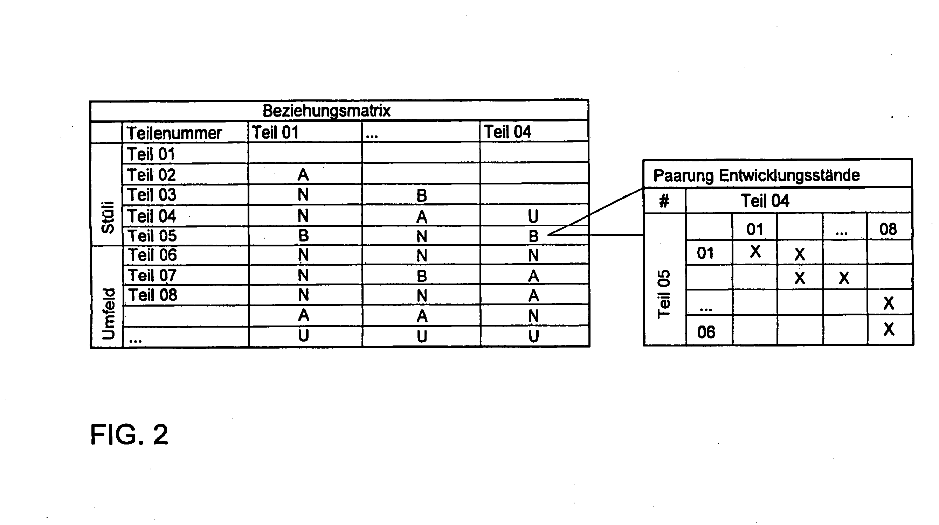

Zunächst wird eine Beziehungsmatrix erstellt, in welcher Abhängigkeitsdaten zwischen den Einzelteilen des Zusammenbaus und der Gesamtstückliste des komplexen Gegenstands, d.h. hier des Kraftfahrzeugs, erfasst werden. Diese Beziehungsmatrix ist in dem Speicher 2 gespeichert. Fig. 2 zeigt ein Beispiel einer solchen Beziehungsmatrix. In der zweiten vertikalen Spalte sind die Teile der Kraftfahrzeugstückliste aufgeführt, wobei zunächst die Teile des Zusammenbaus, d.h. z.B. des Fahrzeugsitzes, aufgeführt sind (Stüli) und dann die Teile, die im Umfeld des Zusammenbaus angeordnet sind. Die zweite horizontale Zeile der Beziehungsmatrix enthält die Teile des Zusammenbaus.

Zwischen den jeweiligen Teilen können vier verschiedene Abhängigkeiten bestehen, welche in der Beziehungsmatrix vermerkt sind. Erstens können zwei Teile aneinander befestigt sein. In diesem Fall wird in die Beziehungsmatrix ein B eingetragen. Zweitens können zwei Teile eine gemeinsame Anlagefläche besitzen. Dies wird durch ein A in der Beziehungsmatrix vermerkt. Drittens kann ein Teil im Umfeld eines anderen Teils angeordnet sein, so dass die Veränderung des einen Teils Auswirkungen auf das andere Teil hat. Dies wird durch ein U in der Beziehungsmatrix vermerkt. Schließlich besteht die Möglichkeit, dass ein Teil von Veränderungen eines anderen Teils nicht betroffen ist. Dies wird durch N in der Beziehungsmatrix vermerkt.

Bei der Weiterentwicklung des Zusammenbaus wird nun ein Teil der Einzelteile des Zusammenbaus Schritt für Schritt verändert, d.h. es durchläuft eine Reihe von Bauständen bzw. Entwicklungsständen. In dem in Fig. 2 gezeigten Beispiel durchläuft z.B. das Teil 05 die Baustände 01 bis 06 und das Teil 04 die Baustände 01 bis 08. Für jeden Baustand jedes Einzelteils wird nun in einer Untermatrix der Beziehungsmatrix vermerkt, ob ein bestimmter Baustand eines Einzelteils mit einem Baustand eines anderen Einzelteils kombiniert verbaut werden kann. In der in Fig. 2 gezeigten Untermatrix bedeutet ein x, dass die jeweiligen Baustände der jeweiligen Teile kombinierbar sind und ein leeres Feld bedeutet, dass die jeweiligen Baustände nicht zueinander passen. Betrifft die Untermatrix die Beziehung "Befestigung" zwischen zwei Teilen, wird außerdem eine Anzahl angegeben. Es wird somit eine qualitative Verknüpfung sämtlicher Einzelteile hergestellt. Ferner werden sämtliche Baustände zweier abhängiger Einzelteile zueinander in Beziehung gesetzt.

Ändert sich z.B. der Entwicklungsstand des Teils 05 vom Baustand 01 zum Baustand 02, wird die Untermatrix der Beziehungsmatrix in dem Speicher 2 durch die Eingabeeinheit 3 so verändert, dass das Teil 05 mit dem Baustand 01 mit dem Baustand 01 des Teils 04 nicht mehr kombinierbar ist, mit dem nächsten Baustand des Teils 04 jedoch weiterhin kombinierbar ist und nun auch mit dem übernächsten Baustand des Teils 04 kombinierbar ist. Diese Änderungen werden bei jedem neuen Baustand jedes Einzelteils anhand der in der Beziehungsmatrix enthaltenen Abhängigkeitsdaten erfasst. Ferner wird erfasst, wenn sich die Beziehungsart zwischen zwei Teilen ändert. Es kann beispielsweise passieren, dass ein Teil nicht mehr an einem anderen Teil befestigt ist, sondern mit diesem Teil nur noch eine gemeinsame Anlagefläche besitzt.

Mittels der Recheneinheit 1 ist es durch Zugriff auf die in dem Speicher 2 gespeicherte Datenbank möglich, automatisch und auf sehr einfache Weise Auswertungen durchzuführen, die bei der Weiterentwicklung des Zusammenbaus wichtig sind. Es kann mittels der Recheneinheit 1 beispielsweise berechnet werden, aus welchen Bauständen der Einzelteile der komplexe Gegenstand bzw. der Zusammenbau zusammengebaut werden kann. Diese Berechnung kann nur deshalb durchgeführt werden, weil für die einzelnen Baustände erfasst ist, ob sie mit den Bauständen anderer Einzelteile kombinierbar sind. Beispielsweise kann der aktuellste Baustand eines Einzelteils vorgegeben werden, und mittels der Recheneinheit 1 berechnet werden, aus welchen Bauständen der restlichen Einzelteile des Zusammenbaus bzw. des komplexen Gegenstands der Gegenstand oder der Zusammenbau zusammengebaut werden kann. Diese Informationen sind beispielsweise dann sehr wichtig, wenn ein Prototyp aufgebaut werden soll.

Ferner kann die Recheneinheit den Lebenslauf des Einzelteils, d.h. die aufeinander folgenden Baustände dieses Einzelteils ausgeben. Außerdem kann der Lebenslauf des komplexen Gegenstands oder eines Zusammenbaus in diesem komplexen Gegenstand ausgegeben werden. Schließlich können bei der Auswertung Kriterien, wie die frühestmögliche Herstellung und die Kosten berücksichtigt werden.

### BEZUGSZEICHENLISTE

- 1: Recheneinheit
- 2: Speicher
- 3: Eingabeeinheit
- 4: Ausgabeeinheit

## Patentansprüche

1. Vorrichtung zur Verwaltung von Daten, die einem aus einer Vielzahl von Einzelteilen zusammengesetzten komplexen Gegenstand zugeordnet sind, bei einer Veränderung des komplexen Gegenstands, wobei bei dieser Veränderung zumindest ein Teil der Einzelteile eine Reihe von Bauständen durchläuft, wobei die Vorrichtung eine Datenbank umfasst, in der gegenseitige Abhängigkeiten der Einzelteile für jeden Baustand anhand von Abhängigkeitsdaten erfasst sind,
**dadurch gekennzeichnet,**
**dass** die Abhängigkeitsdaten Informationen darüber enthalten, ob bei dem zusammengebauten komplexen Gegenstand ein Einzelteil im Umfeld eines anderen Einzelteils angeordnet ist, so dass die Veränderung des einen Einzelteils Auswirkungen auf das andere Einzelteil im Umfeld des einen Einzelteils hat.

2. Vorrichtung nach Anspruch 1,
**dadurch gekennzeichnet,**
**dass** die Abhängigkeitsdaten Informationen darüber enthalten, ob bei dem zusammengebauten komplexen Gegenstand ein Einzelteil an einem anderen Einzelteil befestigt ist.

3. Vorrichtung nach Anspruch 1 oder 2,
**dadurch gekennzeichnet,**
**dass** die Abhängigkeitsdaten Informationen darüber enthalten, ob bei dem zusammengebauten komplexen Gegenstand ein Einzelteil eine gemeinsame Anlagefläche mit einem anderen Einzelteil besitzt.

4. Vorrichtung nach einem der Ansprüche 1 bis 3,
**dadurch gekennzeichnet,**
**dass** die Informationen in den Abhängigkeitsdaten für jeden Baustand des einen Einzelteils und für jeden Baustand des anderen Einzelteils erfasst sind.

5. Vorrichtung nach einem der vorhergehenden Ansprüche,
**dadurch gekennzeichnet,**
**dass** in der Datenbank für jeden Baustand eines Einzelteils erfasst ist, ob er mit einem Baustand eines anderen Einzelteils kombinierbar ist, falls zwischen den beiden Einzelteilen eine Abhängigkeit besteht.

6. Vorrichtung nach einem der vorhergehenden Ansprüche,
**dadurch gekennzeichnet,**
**dass** die Vorrichtung eine mit der Datenbank verbundene Recheneinheit (1) sowie eine Ausgabeeinheit (4) aufweist.

7. Vorrichtung nach Anspruch 6,
**dadurch gekennzeichnet,**
**dass** mit der Recheneinheit (1) berechenbar ist, aus welchen Bauständen der Einzelteile der komplexe Gegenstand zusammengebaut werden kann.

8. Vorrichtung nach Anspruch 6 oder 7,
**dadurch gekennzeichnet,**
**dass** mit der Recheneinheit (1) für einen Baustand eines Einzelteils berechenbar ist, aus welchen Bauständen der restlichen Einzelteile des komplexen Gegenstands dieser zusammengebaut werden kann.

9. Vorrichtung nach einem der vorhergehenden Ansprüche,
**dadurch gekennzeichnet,**
**dass** in der Datenbank die aufeinanderfolgenden Baustände eines Einzelteils erfasst sind.

10. Vorrichtung nach einem der vorhergehenden Ansprüche,
**dadurch gekennzeichnet,**
**dass** die aufeinander folgenden Baustände des komplexen Gegenstands erfasst sind.

11. Verfahren zur Verwaltung von Daten, die einem aus einer Vielzahl von Einzelteilen zusammengesetzten komplexen Gegenstand zugeordnet sind, bei einer Veränderung des komplexen Gegenstands, wobei bei dieser Veränderung zumindest ein Teil der Einzelteile eine Reihe von Bauständen durchläuft, wobei gegenseitige Abhängigkeiten der Einzelteile für jeden Baustand anhand von Abhängigkeitsdaten in einer Datenbank erfasst werden,
**dadurch gekennzeichnet,**
**dass** die Abhängigkeitsdaten Informationen darüber enthalten, ob bei dem zusammengebauten komplexen Gegenstand ein Einzelteil im Umfeld eines anderen Einzelteils angeordnet ist, so dass die Veränderung des einen Einzelteils Auswirkungen auf das andere Einzelteil im Umfeld des einen Einzelteils hat.

12. Verfahren nach Anspruch 11,
**dadurch gekennzeichnet,**
**dass** die Abhängigkeitsdaten Informationen darüber enthalten, ob bei dem zusammengebauten komplexen Gegenstand ein Einzelteil an einem anderen Einzelteil befestigt ist.

13. Verfahren nach Anspruch 11 oder 12,
**dadurch gekennzeichnet,**
**dass** die Abhängigkeitsdaten Informationen darüber enthalten, ob bei dem zusammengebauten komplexen Gegenstand ein Einzelteil eine gemeinsame Anlagefläche mit einem anderen Einzelteil besitzt.

14. Verfahren nach einem der Ansprüche 12 oder 13,
**dadurch gekennzeichnet,**
**dass** die Informationen in den Abhängigkeitsdaten für jeden Baustand des einen Einzelteils und für jeden Baustand des anderen Einzelteils erfasst werden.

15. Verfahren nach einem der Ansprüche 11 bis 14,
**dadurch gekennzeichnet,**
**dass** für jeden Baustand eines Einzelteils erfasst wird, ob er mit einem Baustand eines anderen Einzelteils kombinierbar ist, falls zwischen den beiden Einzelteilen eine Abhängigkeit besteht.

16. Verfahren nach einem der Ansprüche 11 bis 15,
**dadurch gekennzeichnet,**
**dass** berechnet wird, aus welchen Bauständen der Einzelteile der komplexe Gegenstand zusammengebaut werden kann.

17. Verfahren nach einem der Ansprüche 11 bis 16,
**dadurch gekennzeichnet,**
**dass** für einen Baustand eines Einzelteils berechnet wird, aus welchen Bauständen der restlichen Einzelteile des komplexen Gegenstands dieser zusammengebaut werden kann.

18. Verfahren nach einem der Ansprüche 11 bis 17,
**dadurch gekennzeichnet,**
**dass** die aufeinander folgenden Baustände eines Einzelteils ausgegeben werden.

19. Verfahren nach einem der Ansprüche 11 bis 18,
**dadurch gekennzeichnet,**
**dass** die aufeinander folgenden Baustände des komplexen Gegenstands ausgegeben werden.

## Claims

1. Device for administration of data, which are assigned to a complex object composed of a multiplicity of individual parts, in the event of a change in the complex object, at least some of the individual parts passing through a series of build states in the event of this change, the device comprising a database which records mutual dependencies between the individual parts for each build state on the basis of dependency data,
**characterized in that**
the dependency data contain information relating to whether an individual part is arranged in the area surrounding another individual part in the assembled complex object, with the result that the change in one individual part affects the other individual part in the area surrounding the one individual part.

2. Device according to Claim 1,
**characterized in that**
the dependency data contain information relating to whether an individual part is fastened to another individual part in the assembled complex object.

3. Device according to Claim 1 or 2,
**characterized in that**
the dependency data contain information relating to whether an individual part has a common contact surface with another individual part in the assembled complex object.

4. Device according to one of Claims 1 to 3,
**characterized in that**
the information in the dependency data is recorded for each build state of the one individual part and for each build state of the other individual part.

5. Device according to one of the preceding claims,
**characterized in that**
for each build state of an individual part, the database records whether said state can be combined with a build state of another individual part if there is a dependency between the two individual parts.

6. Device according to one of the preceding claims,
**characterized in that**
the device has a computation unit (1), which is connected to the database, and an output unit (4).

7. Device according to Claim 6,
**characterized in that**
the computation unit (1) can be used to calculate those build states of the individual parts from which the complex object can be assembled.

8. Device according to Claim 6 or 7,
**characterized in that**
for a build state of an individual part, the computation unit (1) can be used to calculate those build states of the remaining individual parts of the complex object from which the latter can be assembled.

9. Device according to one of the preceding claims,
**characterized in that**
the database records the successive build states of an individual part.

10. Device according to one of the preceding claims,
**characterized in that**
the successive build states of the complex object are recorded.

11. Method for administration of data, which are assigned to a complex object composed of a multiplicity of individual parts, in the event of a change in the complex object, at least some of the individual parts passing through a series of build states in the event of this change, a database recording mutual dependencies between the individual parts for each build state on the basis of dependency data,
**characterized in that**
the dependency data contain information relating to whether an individual part is arranged in the area surrounding another individual part in the assembled complex object, with the result that the change in one individual part affects the other individual part in the area surrounding the one individual part.

12. Method according to Claim 11,
**characterized in that**
the dependency data contain information relating to whether an individual part is fastened to another individual part in the assembled complex object.

13. Method according to Claim 11 or 12,
**characterized in that**
the dependency data contain information relating to whether an individual part has a common contact surface with another individual part in the assembled complex object.

14. Method according to either of Claims 12 and 13,
**characterized in that**
the information in the dependency data is recorded for each build state of the one individual part and for each build state of the other individual part.

15. Method according to one of Claims 11 to 14,
**characterized in that**
for each build state of an individual part, a record is made of whether said state can be combined with a build state of another individual part if there is a dependency between the two individual parts.

16. Method according to one of Claims 11 to 15,
**characterized in that**
those build states of the individual parts from which the complex object can be assembled are calculated.

17. Method according to one of Claims 11 to 16,
**characterized in that**
for a build state of an individual part, those build states of the remaining individual parts of the complex object from which the latter can be assembled are calculated.

18. Method according to one of Claims 11 to 17,
**characterized in that**
the successive build states of an individual part are output.

19. Method according to one of Claims 11 to 18,
**characterized in that**
the successive build states of the complex object are output.

## Revendications

1. Dispositif de gestion de données qui sont affectées à un objet complexe constitué d'une pluralité de parties individuelles lors d'une modification de l'objet complexe, au moins une partie des pièces individuelles traversant une série d'états de construction lors de cette modification, le dispositif comprenant une base de données dans laquelle sont enregistrées les dépendances mutuelles des pièces mutuelles pour chaque état de construction au moyen de données de dépendance, **caractérisé en ce que** les données de dépendance contiennent des informations indiquant si dans le cas de l'objet complexe assemblé, une pièce individuelle est disposée dans l'environnement d'une autre pièce individuelle de sorte qu'une modification de la pièce individuelle a des effets sur l'autre pièce individuelle dans l'environnement de la pièce individuelle.

2. Dispositif selon la revendication 1, **caractérisé en ce que** les données de dépendance contiennent des informations indiquant si dans le cas de l'objet complexe assemblé, une pièce individuelle est fixée à une autre pièce individuelle.

3. Dispositif selon la revendication 1 ou 2, **caractérisé en ce que** les données de dépendance contiennent des informations indiquant si dans le cas de l'objet complexe assemblé, une pièce individuelle possède une surface d'appui commune avec une autre pièce individuelle.

4. Dispositif selon l'une des revendications 1 à 3, **caractérisé en ce que** les informations dans les données de dépendance sont enregistrées pour chaque état de construction d'une pièce individuelle et pour chaque état de construction de l'autre pièce individuelle.

5. Dispositif selon l'une des revendications précédentes, **caractérisé en ce que** pour chaque état de construction d'une pièce individuelle, on enregistre dans la base de données s'il peut être combiné avec un état de construction d'une autre pièce individuelle s'il existe une dépendance entre les deux pièces individuelles.

6. Dispositif selon l'une des revendications précédentes, **caractérisé en ce que** le dispositif présente une unité de calcul (1) reliée avec la base de données ainsi qu'une unité d'édition (4).

7. Dispositif selon la revendication 6, **caractérisé en ce que** l'unité de calcul (1) permet de calculer les états de construction des pièces individuels à partir desquels peut être assemblé l'objet complexe.

8. Dispositif selon la revendication 6 ou 7, **caractérisé en ce que** l'unité de calcul (1) permet de calculer pour un état de construction d'une pièce individuelle les états de construction des autres pièces individuelles à partir desquels peut être assemblé l'objet complexe.

9. Dispositif selon l'une des revendications précédentes, **caractérisé en ce que** les états de construction successifs d'une pièce individuelle sont enregistrés dans la base de données.

10. Dispositif selon l'une des revendications précédentes, **caractérisé en ce que** les états de construction successifs de l'objet complexe sont enregistrés.

11. Procédé de gestion de données qui sont associées à un objet complexe constitué d'une pluralité de parties individuelles lors d'une modification de l'objet complexe, au moins une partie des pièces individuelles traversant une série d'états de construction lors de cette modification, les dépendances mutuelles des pièces mutuelles pour chaque état de construction étant enregistrées dans une base de données au moyen de données de dépendance, **caractérisé en ce que** les données de dépendance contiennent des informations indiquant si dans le cas de l'objet complexe assemblé, une pièce individuelle est disposée dans l'environnement d'une autre pièce individuelle de sorte qu'une modification de la pièce individuelle a des effets sur l'autre pièce individuelle dans l'environnement de la pièce individuelle.

12. Procédé selon la revendication 11, **caractérisé en ce que** les données de dépendance contiennent des informations indiquant si dans le cas de l'objet complexe assemblé, une pièce individuelle est fixée à une autre pièce individuelle.

13. Procédé selon la revendication 11 ou 12, **caractérisé en ce que** les données de dépendance contiennent des informations indiquant si dans le cas de l'objet complexe assemblé, une pièce individuelle possède une surface d'appui commune avec une autre pièce individuelle.

14. Procédé selon l'une des revendications 12 ou 13, **caractérisé en ce que** les informations dans les données de dépendance sont enregistrées pour chaque état de construction d'une pièce individuelle et pour chaque état de construction de l'autre pièce individuelle.

15. Procédé selon l'une des revendications 11 à 14, **caractérisé en ce que** pour chaque état de construction d'une pièce individuelle, on enregistre s'il peut être combiné avec un état de construction d'une autre pièce individuelle s'il existe une dépendance entre les deux pièces individuelles.

16. Procédé selon l'une des revendications 11 à 15, **caractérisé en ce que** l'on calcule les états de construction des pièces individuelles à partir desquels l'objet complexe peut être assemblé.

17. Procédé selon l'une des revendications 11 à 16, **caractérisé en ce que** l'on calcule pour un état de construction d'une pièce individuelle les états de construction des autres pièces individuels à partir desquels peut être assemblé l'objet complexe.

18. Procédé selon l'une des revendications 11 à 17, **caractérisé en ce que** les états de construction successifs d'une pièce individuelle sont édités.

19. Procédé selon l'une des revendications 11 à 18, **caractérisé en ce que** les états de construction successifs de l'objet complexe sont édités.
